# EUROPÄISCHE PATENTSCHRIFT

(11) **EP 3 385 673 B1**
(45) Veröffentlichungstag und Bekanntmachung des Hinweises auf die Patenterteilung: **05.07.2023**
(21) Anmeldenummer: 17465511.8
(22) Anmeldetag: 07.04.2017
(51) Int. Cl.: G01C 21/32

(54) **VERFAHREN UND EINRICHTUNG ZUR REDUKTION VON ZWISCHENPUNKTEN IN EINEM STRECKENZUG**
METHOD AND DEVICE FOR THE REDUCING THE NUMBER OF INTERMEDIATE NODES IN A ROUTE
PROCÉDÉ ET DISPOSITIF DE RÉDUCTION DU NOMBRE DE NOEUDS INTERMÉDIAIRES DANS UNE ROUTE

(43) Veröffentlichungstag der Anmeldung: 10.10.2018
(73) Patentinhaber: Continental Automotive Technologies GmbH, 30165 Hannover (DE)
(72) Erfinder: Flug, Christian, 93077 Bad Abbach (DE); Chiorean, Rares, 90359 Regensburg (DE); Breaban, Mihaela, 700319 Iasi (RO); Schott, Paul, 94315 Straubing (DE)
(74) Vertreter: Continental Corporation

(56) Entgegenhaltungen:
- EP-A2- 2 418 460
- CN-A- 106 197 440
- US-A1- 2013 328 937

## Beschreibung

### TECHNISCHES GEBIET

Die Erfindung betrifft das Gebiet der Fahrassistenzsysteme. Die Erfindung betrifft im Besonderen ein Verfahren und eine Einrichtung zur Komplexitätsreduktion von mittels Polygonen dargestellten Kartendaten für eine Elektronischer-Horizont-Anwendung.

### TECHNISCHER HINTERGRUND

Moderne Fahrzeuge weisen eine Vielzahl verschiedener Fahrassistenzfunktionen auf, die den Fahrer bei der Routenplanung oder bei der Führung des Fahrzeuges unterstützen. ADAS (Advanced Driver Assistance Systems) wurden entwickelt, um den Komfort, die Effizienz, die Sicherheit und Fahrerzufriedenheit während des Fahrens zu erhöhen. Hierbei handelt es sich um elektronische Zusatzeinrichtungen in Kraftfahrzeugen, welche den Fahrer in bestimmten Fahrsituationen unterstützen. ADAS betreffen bspw. adaptive Scheinwerfereinstellungen, adaptive Geschwindigkeitsregelung, Warnungen bei Verlassen der Fahrspur, Kurvenwarnungen, Geschwindigkeitsbegrenzungswarnung. ADAS greifen hierzu teilautonom oder autonom in Antrieb, Steuerung oder Signalisierungseinrichtungen des Fahrzeugs ein und warnen durch geeignete Mensch-Maschine-Schnittstellen den Fahrer kurz vor oder während kritischer Situationen. Einige ADAS verwenden hierzu eine Reihe von Sensoren wie RADAR, Infrarot, Ultraschall und optische Sensoren wie digitale Videokameras und LIDAR.

Einige ADAS verwenden digitale Kartendaten. Die digitale Karte liefert insbesondere Informationen über das Straßennetzwerk, die Straßengeometrie, Straßenbedingungen und das Terrain um ein Fahrzeug. Digitale Kartendaten liefern wertvolle Informationen, die mittels Sensoren nicht erfasst werden können wie Krümmung, Steigung, nicht angezeigte Geschwindigkeitsbegrenzungen, Fahrspurbegrenzungen, etc. Darüber hinaus kommt einer digitalen Karte eine gewisse Prädiktionsfunktion zu, die über die Erfassungsmöglichkeiten von Sensoren oder die Sicht des Fahrers hinausgeht.

ADAS, welche digitale Kartendaten benötigen, verwenden in der Regel eine geographische Datenbank, welche mit dem Navigationssystem des Fahrzeugs assoziiert ist. Diese Datenbank des Navigationssystems enthält Daten zur Abbildung eines Stra-ßennetzwerks in einer Region, insbesondere die geographischen Daten einschließlich Höhe von Straßen, Kreuzungen, Abbiegerestriktionen bei Kreuzungen, Straßennamen, Geschwindigkeitsbegrenzungen.

Die Datenbank des Navigationssystems kann mehr Daten enthalten, als für eine ADAS Anwendung notwendig sind. Bei einer derartigen Anwendung kann es sich um eine E-Horizon-Anwendung handeln, welche einen elektronischen Horizont bestimmt. Ein elektronischer Horizont ist eine Ansammlung von Straßen und Kreuzungen, welche sich von einer gegenwärtigen Fahrzeugposition erstrecken bis zu einem Ausmaß, welches von einer E-Horizon-Anwendung bestimmt wird. Die Ansammlung von Straßen und Kreuzungen sind potentielle Pfade, denen das Fahrzeug von der gegenwärtigen Position folgen kann. Ein E-Horizon-System kann in der Regel nur Kartendaten mit einer begrenzten Komplexität verarbeiten, andererseits müssen die Kartendaten auch Genauigkeitsanforderungen genügen.

Kartendaten können mittels geometrischer Figuren wie Polygone im zweidimensionalen Raum oder Polyeder im dreidimensionalen Raum repräsentiert werden. Ein Polygon oder Streckenzug kann hierbei als eine Menge verbundener Segmente, welche eine Form ergeben, definiert werden. Ein Polygon kann auch über eine Menge von Knoten definiert werden, die, wenn sie mit Segmenten verbunden werden, eine Form ergeben. Ein Polygon kann auch über eine Menge von Segmenten und Knoten definiert werden, die wenn sie sich ergänzen, eine Form ergeben. Ein Knoten ist ein Punkt, an dem sich zwei Segmente treffen. Ein Polygon kann mit einer beliebigen Anzahl von Knoten beschrieben werden. Zwei Segmente, die sich im Winkel von 180° treffen formen ein größeres Segment, welches die beiden Segmente einschließt. Ein Segment ist mithin eine Verbindung oder eine Kante von zwei Punkten. Straßennetzwerke können durch Knoten und Kanten beschrieben werden, wobei ein Straßensegment durch einen Anfangsknoten und einen Endknoten begrenzt ist und die Kante eine detaillierte geometrische Ausformung wie eine Krümmung aufweisen kann. Die detaillierte geometrische Ausformung geschieht durch Zwischenknoten (Kontrollknoten oder engl. shape points) . Die Knoten und Zwischenknoten werden durch Latitude (geografische Breite) und Longitude (geografische Breite), mithin durch ihre Position beschrieben. Zusätzlich werden die Knoten durch die Attribute Steigung, Höhe und/oder Kurvenradius beschrieben. Ein Straßensegment kann mehrere Kurven aufweisen. Ein Straßensegment kann durch B-Splines oder kubische Bezier-Kurven beschrieben werden. Eine Bezier-Kurve wird durch vier Kontrollknoten beschrieben, wobei der letzte Kontrollknoten einer vorangegangen Bezier-Kurve derselbe wie der erste Kontrollpunkt der folgenden Bezier-Kurve ist.

Ein Straßensegment kann durch Polygone angenähert werden. In diesem Fall besteht ein Straßensegment aus einer Vielzahl von verbundenen Segmenten, deren Anordnung über die Knoten und Zwischenknoten mit zumindest dem zusätzlichen Attribut Höhe definiert ist.

Verwendet ein E-Horizon-System Kartendaten, die durch Polygone dargestellt sind, so kann sich der Notwendigkeit von Höheninformation ergeben, bspw. um den Antrieb des Fahrzeugs bei Höhen- und Talfahrten zu regeln. Andererseits dürfen die Karten nicht zu komplex, d.h. die Anzahl von Zwischenknoten nicht unnötig hoch sein, um eine Echtzeitverarbeitung zu gewährleisten.

Im Stand der Technik sind Verfahren zur Vereinfachung von Polygonen oder Streckenzügen bekannt. Die Verfahren dienen zur Kurvenglättung und Generalisierung von Karten. Diese werden im Folgenden als Linienverallgemeinerungsverfahren bezeichnet. Eine Klasse von Linienverallgemeinerungsverfahren betrachtet ein Polygon als Ganzes und schreitet zu feineren Approximationen fort.

Ein bekanntes Linienverallgemeinerungsverfahren dieser Klasse ist der 2D-Douglas-Peucker-Algorithmus, dessen Ziel es ist, einen durch eine Folge von Punkten gegebenen Streckenzug durch Weglassen einzelner so zu vereinfachen, dass die grobe Gestalt erhalten bleibt. Dazu erfolgt eine Aufteilung des Ausgangs-Polygons in zwei Abschnitte, die dann ihrerseits den Algorithmus durchlaufen. Es handelt sich mithin um ein rekursives Verfahren.

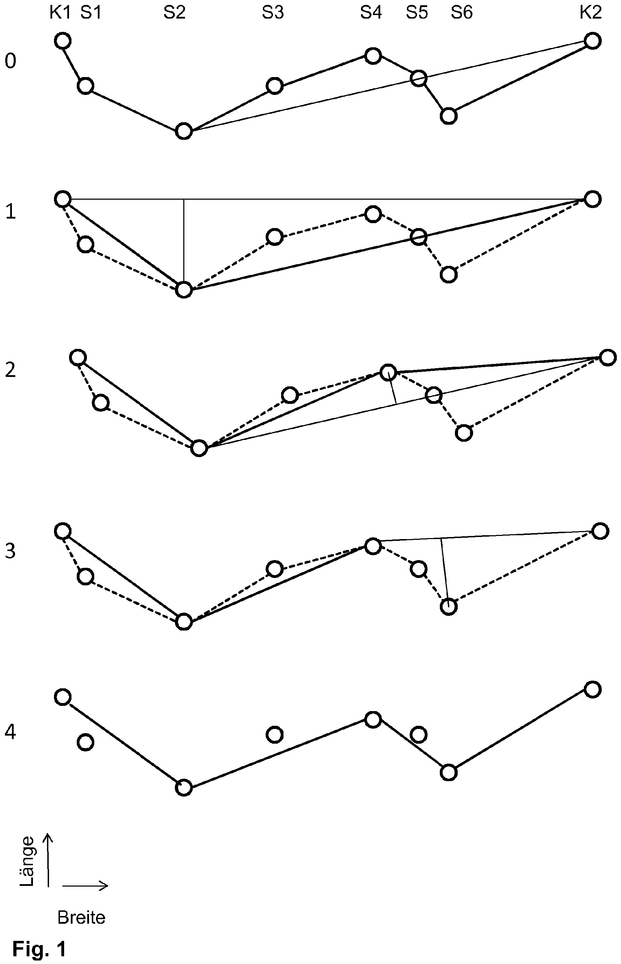

Der 2D-Douglas Peucker-Algorithmus wird mit Bezug auf Fig. 1 beschrieben, welche ein Polygon in seiner Ausgangsform 0 und in den verschiedenen Approximationsstufen 1 bis 4 mit insgesamt n=8 Knoten zeigt. Als erste Approximation wird ein Segment zwischen dem Anfangsknoten K1 und dem Endknoten K2 betrachtet. Um zu prüfen, ob diese Approximation ausreicht, wird unter den n-2 Zwischenknoten derjenige Zwischenknoten gesucht, welcher den größten Abstand von dem Segment zwischen K1 und K2 hat. In Approximationsstufe 1 ist dies S2 mit dem dargestellten Abstand als Lot. Ist dieser Abstand kleiner als eine Toleranz, so ist die Approximation ausreichend und sämtliche anderen Zwischenknoten können verworfen werden. Dies sei hier nicht der Fall. Somit bleibt der S2 erhalten und die Approximation wird verfeinert.

Als zweite Approximation wird ein Segment zwischen K1 und S2 und ein Segment zwischen S2 und K2 betrachtet. Hierbei stellt sicher heraus, dass S1 einen Abstand zu dem Segment zwischen K1 und S2 hat, de r geringer als die Toleranz ist. S1 kann entfernt werden. Der Knoten mit dem größten Abstand zum Segment zwischen S2 und K2 ist S4. Der Abstand ist größer als die Toleranz. Deshalb muss das Segment zwischen S2 und K2 weiter verfeinert werden.

Die dritte Approximation besteht aus einem Segment zwischen K1 und S2, einem Segment zwischen S2 und S4 und einem Segment zwischen S4 und K2. In de r dritten Approximationsstufe wird untersucht, ob diese Approximation ausreichend ist. Dies ist bezüglich des Segments zwischen S4 und K2 nicht der Fall, da der Abstand von S6 zu diesem Segment die Toleranz überschreitet. Folglich muss dieses Segment weiter verfeinert werden.

Das Ergebnis ist in der vierten Approximationsstufe zu sehen mit einer vierten Approximation mit einem Segment zwischen K1 und S2, einem Segment zwischen S2 und S3 und einem Segment zwischen S4 und S6 sowie einem Segment zwischen S6 und K2.

Bei dem Douglas-Peucker-Algorithmus handelt es sich mithin um eine zweidimensionales Linienverallgemeinerungsverfahren, wobei lediglich Latitude und Longitude von aufeinander folgenden Zwischenknoten betrachtet werden.

Die Limitierung auf diese Attribute erfüllt jedoch nicht die Anforderungen eines elektronischen Horizonts. Insbesondere können die geforderten Toleranzen für Steigung, Kurvenradius und Höhe nicht garantiert werden, da diese im zwei-dimensionalen Douglas-Peucker-Algorithmus überhaupt keine Berücksichtigung finden.

US 2013/0328937 A1 offenbart einen verbesserten Douglas-Peucker-Algorithmus als Linienverallgemeinerungsverfahren, bei dem Kreuzungen als Knotenpunkte nicht entfernt werden dürfen.

In CN 106 197 440 A ist ein verbesserter Douglas-Peucker-Algorithmus als Linienverallgemeinerungsverfahren beschrieben, bei dem Knotenpunkte zwischen Segmenten, die in Extremwinkeln zueinanderstehen, nicht entfernt werden dürfen.

EP 2 418 460 A2 offenbart ein Verfahren zur Rekonstruktion eines Kurvenverlaufs einer Strasse.

### OFFENBARUNG DER ERFINDUNG

Es ist daher Aufgabe der Erfindung, ein Verfahren und eine Einrichtung zur Reduktion von Zwischenpunkten anzugeben, welche die Anforderungen an eine E-Horizont-Anwendung erfüllen. Diese Aufgabe wird mit einem Verfahren gemäß dem unabhängigen Verfahrensanspruch und einer Vorrichtung gemäß dem unabhängigen Vorrichtungsanspruch gelöst. Die abhängigen Ansprüche betreffen vorteilhafte Ausgestaltungen.

Ein Aspekt betrifft ein Verfahren zur Reduktion von Zwischenknoten in einem Streckenzug mit einem oder mehreren Zwischenknoten einer Menge von Zwischenknoten zwischen einem Anfangsknoten und einem Endknoten. Dem Anfangsknoten, dem Endknoten und jedem Zwischenknoten der Menge von Zwischenkoten sind neben den Attributen Längengrad und Breitgrad zumindest ein weiteres Attribut mit einem Attributwert und einer Attributrichtung einer Menge weiterer Attribute zugeordnet. Bei den Attributen handelt es sich um eine Steigung, einen Kurvenradius und/oder eine Höhe. In einem oder mehreren Prozessoren, werden für jeden Zwischenknoten, beginnend ab dem Anfangsknoten, folgende Verfahrensschritte ausgeführt: Vergleichen der Attributrichtung des zumindest einen weiteren Attributs eines Zwischenknoten mit der Attributrichtung des zumindest einen weiteren Attributes des unmittelbaren Vorgängerknotens; Markieren des Zwischenknoten als signifikanten Knoten, wenn sich aus dem Vergleichen ein Richtungswechsel der Attributrichtung ergibt; und
Anwenden eines Linienverallgemeinerungsverfahrens bezüglich der Attribute Längengrad und Breitengrad, wobei die als signifikante Knoten markierte Zwischenknoten nicht entfernt werden dürfen. Bei dem Linienverallgemeinerungsverfahren kann es sich insbesondere um den Douglas-Peucker-Algorithmus handeln.

Angenommen, der Streckenzug modelliert ein gerade verlaufendes Straßensegment, welches ein bestimmtes Höhenprofil aufweist, d.h. jedem Knoten und Zwischenknoten ist neben den Attributen Breitengrad und Längengrad zusätzlich ein Wert für die Höhe zugeordnet. Ein Richtungswechsel bezüglich des Attributs Höhe bedeutet, dass es sich bei dem Höhenwert des betreffenden Zwischenknotens um ein zumindest lokales Höhenmaximum oder ein zumindest lokales Höhenminimum handeln muss. Wird der Douglas-Peucker auf ein gerade verlaufendes Straßensegment bezüglich der Attribute Breitengrad und Höhengrad ohne Berücksichtigung von als signifikant eingestuften Zwischenknoten angewendet, so verbleibt ein einziges Segment zwischen Anfangsknoten und Endknoten, da bei einem gerade verlaufenden Straßensegment gerade keine Variation senkrecht zur Verbindung von Anfangs- und Endpunkt verläuft. Sämtliche Zwischenknoten wären eliminiert und mit diesen auch sämtliche Höheninformation, die für ein ADAS relevant sind. Dadurch, dass zumindest die Zwischenknoten als signifikant markiert werden, bei denen ein zumindest lokales Höhenminimum oder zumindest lokales Höhenmaximum vorliegt, und diese durch den Douglas-Peucker-Algorithmus nicht entfernt werden dürfen, bleibt die wichtigste Höheninformation erhalten.

Ein Richtungswechsel ist in Bezug auf den unmittelbaren Vorgängerknoten definiert.

Ein Richtungswechsel bezüglich des Attributs Steigung ist als von Steigung aufwärts nach Steigung abwärts oder von Steigung abwärts nach Steigung aufwärts definiert.

Ein Richtungswechsel für den Kurvenradius ist als von Kurvenradius links nach Kurvenradius rechts oder von Kurvenradius rechts nach Kurvenradius links definiert.

Ein Richtungswechsel für die Höhe ist als Höhe steigend nach Höhe fallend oder Höhe fallend nach Höhe steigend definiert.

Neben der im Douglas-Peucker-Algorithmus Berücksichtigung findenden Toleranz bezüglich Längengrad und Breitengrad und den Richtungswechseln bei weiteren Attributen, kann das Verfahren auch um eine Toleranzbetrachtung hinsichtlich der weiteren Attribute erweitert werden.

Gemäß einem Aspekt werden zusätzlich vor Anwenden des Linienverallgemeinerungsverfahrens, in einem oder mehreren Prozessoren, für jeden Zwischenknoten der Menge von Zwischenknoten, beginnend ab dem Anfangsknoten folgende Verfahrensschritte durchgeführt: Bestimmen einer Differenz zwischen dem Wert des mindestens einen weiteren Attributes eines Zwischenknotens und dem Wert des mindestens einen weiteren Attributes eines Vorgängerknotens, wobei der Vorgängerknoten einen nächster vorangegangener Anfangsknoten oder ein nächster vorangegangener noch nicht entfernter Zwischenknoten ist; Markieren des Zwischenknoten als signifikanten Knoten, wenn die Differenz einen Schwellwert überschreitet, andernfalls Entfernen des Zwischenknoten aus der Menge von Zwischenknoten.

Es werden mithin aus einem Steigungsprofil, einem Höhenprofil oder einem Kurvenprofil nur solche Zwischenknoten entfernt, bei dem der Unterschied der Steigung, Höhe oder Kurvenradius im Vergleich zum Vorgängerknoten unter einem Schwellwert bleibt, wobei der Vorgängerknoten ein Anfangsknoten oder noch nicht entfernter Zwischenknoten ist.

Gemäß einem weiteren Aspekt werden zusätzlich vor Anwenden des Linienverallgemeinerungsverfahrens, in einem oder mehreren Prozessoren, für jeden Zwischenknoten der Menge von Zwischenknoten, beginnend ab dem Anfangsknoten folgende Verfahrensschritte durchgeführt: Bestimmen einer ersten Differenz zwischen dem Wert des mindestens einen weiteren Attributes eines Zwischenknotens und dem Wert des mindestens einen weiteren Attributes eines Vorgängerknotens, wobei der Vorgängerknoten einen nächster vorangegangener Anfangsknoten oder ein nächster vorangegangener nicht entfernter Zwischenknoten ist; Bestimmen einer zweiten Differenz zwischen dem Wert des mindestens einen weiteren Attributes eines unmittelbaren Nachfolgerknotens und dem Wert des mindestens eines weiteren Attributes des Zwischenknoten; Bestimmen einer Differenz zwischen der ersten Differenz und der zweiten Differenz; und Markieren des Zwischenknoten als signifikanten Knoten, wenn die Differenz einen Schwellwert überschreitet, andernfalls Entfernen des Zwischenknoten.

Bei dem mindestens einen zusätzlichen Attribut kann es sich insbesondere um eine Höhe handeln. Es wird mithin die Steigung des Segments zwischen Zwischenknoten und Vorgängerknoten und die Steigung des Segments zwischen Nachfolgerknoten und Zwischenknoten ermittelt. Die Differenz dieser Segmentsteigungen wird mit dem Schwellwert, d.h. der größtmöglichen Toleranz verglichen.

Gemäß einem weiteren Aspekt werden zusätzlich vor Anwenden des Linienverallgemeinerungsverfahrens in einem oder mehreren Prozessoren, für jeden Zwischenknoten der Menge von Zwischenknoten, beginnend ab dem Anfangsknoten folgende Verfahrensschritte durchgeführt: Bestimmen einer ersten Differenz zwischen dem Wert des mindestens einen weiteren Attributes eines Zwischenknotens und dem Wert des mindestens einen weiteren Attributes eines Vorgängerknotens, wobei der Vorgängerknoten einen nächster vorangegangener Anfangsknoten oder ein nächster vorangegangener nicht entfernter Zwischenknoten ist; Bestimmen einer zweiten Differenz zwischen dem Wert des mindestens einen weiteren Attributes des unmittelbaren Nachfolgerknotens und dem Wert des mindestens eines weiteren Attributes des Vorgängerknoten; Bestimmen einer Differenz zwischen der ersten Differenz und der zweiten Differenz; und
Markieren des Zwischenknoten als signifikanten Knoten, wenn die Differenz einen Schwellwert überschreitet, andernfalls Entfernen des Zwischenknoten.

Bei dem mindestens einen zusätzlichen Attribut kann es sich insbesondere um eine Höhe handeln. Es wird mithin die Steigung zwischen Zwischenknoten und Vorgängerknoten und die Steigung zwischen Nachfolgerknoten und Vorgängerknoten ermittelt. Die Differenz dieser Steigungen wird mit dem Schwellwert verglichen.

Gemäß einem Aspekt können auf dieselbe Weise wie oben beschrieben mehrere Attribute der Menge von weiteren Attributen Berücksichtigung finden.

Das mindestens eine weitere Attribut sei die Höhe. Das Linienverallgemeinerungsverfahren sei der Douglas-Peucker-Algorithmus. Das bedeutet, dass zunächst der Douglas-Peucker-Algorithmus auf das Höhenprofil angewendet wird, wobei verfahrensgemäß ausgeschlossen ist, dass zumindest lokale Höhenmaxima oder zumindest lokale Höhenminima entfernt werden. Die verbleibenden Zwischenknoten sind notwendig, um das Höhenprofil genau abzubilden und dürfen im weiteren Verfahren nicht mehr entfernt werden. Das Höhenprofil beschreibt die Höhe versus die Projektion des Streckenzugs entweder auf den Breitengrad oder den Längengrad. Nun wird ein weiteres Mal der Douglas-Peucker-Algorithmus angewendet, diesmal jedoch bezüglich Längengrad und Breitengrad, wobei neben den sich durch Richtungswechsel ergebenden signifikanten Zwischenknoten auch die durch die Anwendung des Douglas-Peucker-Algorithmus bezüglich Höhe und Projektion ermittelten signifikanten Zwischenknoten nicht entfernt werden dürfen. Im Ergebnis ergibt sich ein Streckenzug der hinsichtlich Längen- und Breitengrad optimal Markieren von nach Anwenden des Linienreduktionsverfahrens verbleibenden Zwischenknoten als signifikante Knoten; und

Anwenden des Linienverallgemeinerungsverfahrens bezüglich der Attribute Längengrad und Breitengrad, wobei die als signifikante Knoten markierte Zwischenknoten nicht entfernt werden dürfen.

Sobald ein Richtungswechsel einer Attributrichtung wird der entsprechende Zwischenknoten als signifikanter Knoten markiert. Der signifikante Knoten darf bei Anwendung der beiden folgenden Linienverallgemeinerungsverfahren nicht entfernt werden. Das Linienverallgemeinerungsverfahren bezüglich des mindestens einen weiteren Attributs und der Projektion des Streckenzugs entweder auf den Längengrad oder den Breitgrad dient zur weiteren Bestimmung von signifikanten Knoten die im folgenden Linienverallgemeinerungsverfahren bezüglich des Längengrades und des Breitengrades nicht entfernt werden dürfen.

Das mindestens eine weitere Attribut sei die Höhe. Das Linienverallgemeinerungsverfahren sei der Douglas-Peucker-Algorithmus. Das bedeutet, dass zunächst der Douglas-Peucker-Algorithmus auf das Höhenprofil angewendet wird, wobei verfahrensgemäß ausgeschlossen ist, dass zumindest lokale Höhenmaxima oder zumindest lokale Höhenminima entfernt werden. Die verbleibenden Zwischenknoten sind notwendig, um das Höhenprofil genau abzubilden und dürfen im weiteren Verfahren nicht mehr entfernt werden. Das Höhenprofil beschreibt die Höhe versus die Projektion des Streckenzugs entweder auf den Breitengrad oder den Längengrad. Nun wird ein weiteres Mal der Douglas-Peucker-Algorithmus angewendet, diesmal jedoch bezüglich Längengrad und Breitengrad, wobei neben den sich durch Richtungswechsel ergebenden signifikanten Zwischenknoten auch die durch die Anwendung des Douglas-Peucker-Algorithmus bezüglich Höhe und Projektion ermittelten signifikanten Zwischenknoten nicht entfernt werden dürfen. Im Ergebnis ergibt sich ein Streckenzug der hinsichtlich Längen- und Breitengrad optimal reduziert ist und dennoch genügend genaue Höheninformation für einen elektronischen Horizont bereithält.

Ein Aspekt betrifft eine Vorrichtung mit einem Prozessor, welcher eingerichtet, ein Verfahren wie oben beschrieben auszuführen. Das Verfahren kann in Programminstruktionen abgebildet sein, die der Prozessor ausführt.

### KURZFASSUNG DER FIGUREN

Die Erfindung wird im Folgenden an Hand von Ausführungsbeispielen mit Bezug auf Figuren beschrieben. Es zeigen
- Fig. 1: Verfahrensstufen des Douglas-Peucker-Algorithmus angewendet auf ein Polygon;
- Fig. 2: ein Blockschaltbild einer ADAS Architektur;
- Fig. 3: ein Blockschaltbild von möglichen Softwareapplikationen in der ADAS Architektur;
- Fig. 4: einen durch ein Polygon modellierten Geländeschnitt;
- Fig. 5: Beispiele für Richtungswechsel für verschiedene Attribute; und
- Fig. 6: ein Flussdiagramm / Programmablaufplan des Verfahrens

### DETAILLIERTE BESCHREIBUNG

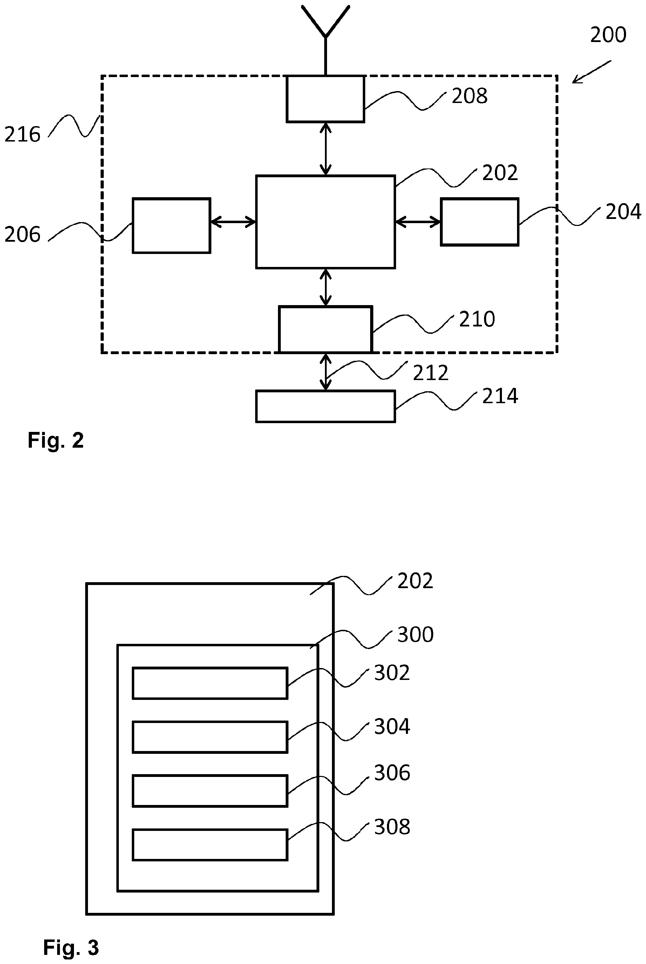

Fig. 2 zeigt ein Blockschaltbild einer ADAS Architektur 200. Die ADAS Architektur 200 hat eine Karten- und Positionierungs-Engine 204 und Fahrerassistenzapplikationen 214. Bei der Karten- und Positionierungs-Engine 204 kann es sich um einzelnes Modul handeln oder dieses kann in verschiedene Packages aufgeteilt werden. Es kann auch in andere Packages wie ein Sensor-Package integriert werden. Die Katen- und Positionierungsengine 204 weist einen Prozessor 102, ein Positionierungssystem 204, eine Kartendatenbank 206, ein Kommunikationssystem 208 mit einer Kommunikationsschnittstelle insbesondere zur Mobilkommunikation und eine Datenbusschnittstelle 210 auf. Der Prozessor 202 empfängt Daten von dem Positionierungssystem 204, der Kartendatenbank 206, dem Kommunikationssystem 208 und der Datenbusschnittstelle 210 und verarbeitet diese mittels Softwareprogrammen oder Softwareapplikationen, von denen einige weiter unten mit Bezug auf Fig. 3 beschrieben werden.

Der Prozessor 202 stellt den Fahrerassistenzapplikationen 214 verarbeitete Daten über die Datenbusschnittstelle 210 und den Datenbus 212 bereit. Bei einer der Fahrassistenzapplikationen 214 kann es sich um einen elektronischen Horizont handeln. Das Positionierungssystem 214 verwendet GPS-Technologie und ein Gyroskop und kann darüber hinaus Sensoren zur Erfassung der Fahrzeuggeschwindigkeit, Richtung, Orientierung usw. aufweisen. Das Positionierungssystem 214 stellt diese Informationen dem Prozessor 202 bereit. Einige auf dem Prozessor laufende Softwareapplikationen benötigen diese Informationen.

Die geographische Kartenbank 206 enthält Kartendaten, wie sie für ein Navigationssystem üblich sind. Die Kartendaten enthalten insbesondere Daten bezüglich Straßen und Kreuzungen in Form von Straßensegmenten zwischen einem Anfangsknoten und einem Endknoten und einer geometrischen Ausformung mittels Zwischenknoten zwischen Anfangsknoten und Endknoten. Die Straßensegmente können als Polygone modelliert werden.

Fig. 3 zeigt ein Blockdiagramm mit verschiedenen Softwareapplikationen 300 die auf dem Prozessor 202 laufen können. Die Softwareapplikationen beinhalten eine Kartenzugangsapplikation 302, eine Kartenupdateapplikation 304, eine Fahrzeugpositionierungsapplikation 306 und eine E-Horizont-Applikation 308.

Die Kartenzugangsapplikation 302 stellt Kartenzugangsdaten der geografischen Kartendatenbank 206 bereit. Die Kartenzugangsapplikation 302 empfängt eine Anfrage vom Prozessor 202 für einen Kartenausschnitt und ruft den Kartenausschnitt mittels der Kartenzugangsdaten in der geografischen Kartendatenbank 206 ab.

Die Kartenupdateapplikation 304 dient zum Update der geografischen Kartendatenbank 206. Kartenausschnitte, die keine aktuellen Kartendaten mehr beinhalten, können ausgetauscht werden. Darüber hinaus kann die geografische Kartendatenbank 206 um weitere Kartenausschnitte ergänzt werden. Hierzu stellt die Kartenupdateapplikation einen Kommunikationskanal zwischen dem Kommunikationssystem 208 und der geografischen Kartendatenbank her, über den aktuelle Kartendaten übertragen werden können.

Die Fahrzeugpositionierungsapplikation 306 bestimmt die Position des Fahrzeugs relativ zu dem Straßennetzwerk, welches durch die geografische Kartendatenbank 206 repräsentiert wird. Die Fahrzeugpositionierungsapplikation 306 verwendet die durch das Positionierungssystem 204 erzeugten Positionierungsdaten und gleicht diese mit den Kartendaten aus der geografischen Kartendatenbank 206 mittels eines Kartenabgleichalgorithmus ab.

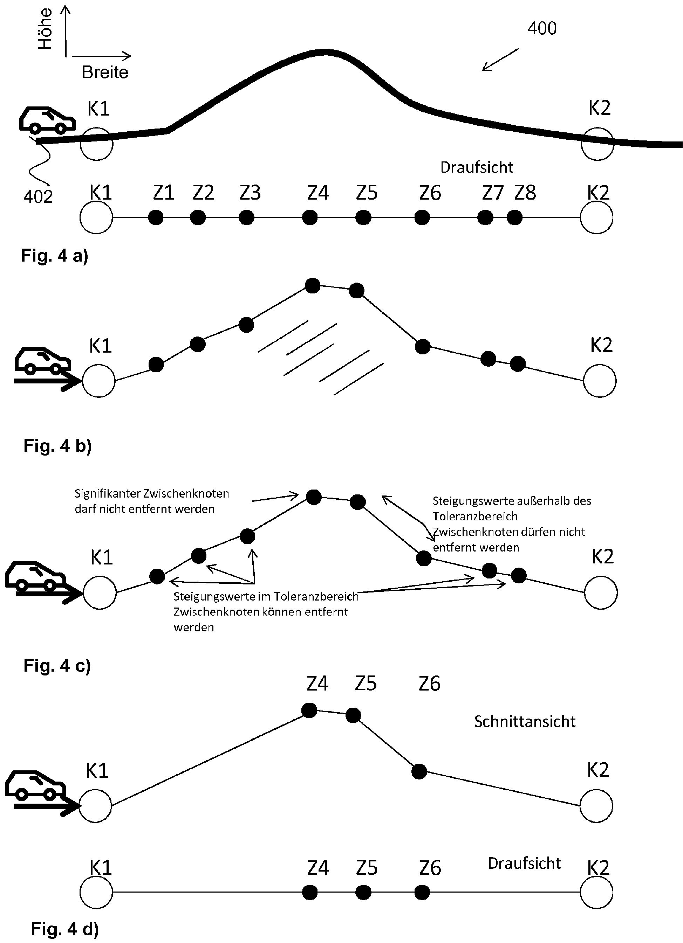

Die E-Horizont-Applikation 308 berechnet einen elektronischen Horizont. Hierzu verwendet diese Kartendaten aus der elektronischen Kartendatenbank 206. Die Kartendaten liegen allerdings in einer zu hohen Komplexität für die E-Horizont Applikation, da diese einen elektronischen Horizont in Echtzeit berechnen soll. Daher müssen die Kartendaten in ihrer Komplexität reduziert werden und dennoch gewissen Genauigkeitsanforderungen genügen. Eine derartige Komplexitätsreduktion eines durch einen Polygonzug modellierten Straßensegments wird im Folgenden mit Bezug auf Fig. 4 beschrieben.

Fig. 4 a) zeigt einen Schnittbild 400 eines Geländes mit einer gerade verlaufenden Straße zwischen dem Anfangspunkt K1 und dem Endpunkt K2, auf der sich ein Fahrzeug 402 bewegt. Die Straße verläuft in Richtung eines Breitengrades, weist also keine Variation in Richtung eines Längengrades auf. Die Straße ist jedoch nicht flach, sondern führt über einen Hügel. Die Straße weist mithin ein Höhenprofil auf. Die Straße soll durch einen Polygon modelliert werden, dessen Anfangsknoten K1, dessen Zwischenknoten Z1, Z2, ..., Z8 und dessen Endnoten K2 in der Draufsicht dargestellt sind.

Fig. 4 b) zeigt das zugehörige Polygon mit der zugehörigen Anordnung der Zwischenpunkte in der Schnittansicht. Das Polygon weist im Zwischenknoten Z4 ein globales Maximum auf. Das Segment zwischen den Zwischenknoten Z4 und Z5 modelliert eine Kuppe des Hügels. Das Segment zwischen den Zwischenknoten Z5 und Z6 weist ein starkes Gefälle auf.

Bei Anwendung des 2D Douglas-Peucker-Algorithmus bezüglich der Attribute Längengrad und Breitengrad auf das Polygon würde die Höheninformation komplett verloren gehen, da die Straße gerade verläuft und sämtliche Zwischenknoten Z1, Z2, ... , Z4 entfernt würden. Da die Höheninformation in einen elektronischen Horizont relevant ist, soll signifikante Höheninformation erhalten bleiben.

Der Prozessor 202 untersucht für jeden Zwischenknoten Z1, Z2, ..., Z4, ob ein Höhenrichtungswechsel, d.h. ein Richtungswechsel in der Segmentsteigung vorliegt. Das ist hier beim Zwischenknoten Z4 der Fall, da dieser ein lokales Höhenmaximum darstellt. Der Zwischenknoten Z4 wird als signifikanter Knoten markiert und darf bei einer späteren Anwendung des Douglas-Peucker-Algorithmus bezüglich der Attribute Längengrad und Breitengrad nicht entfernt werden. Somit ist zunächst das lokale Maximum des Höhenprofils konserviert.

Für einen elektronischen Horizont kann jedoch die Konservierung von lokalen Maxima oder Minima des Höhenprofils nicht ausreichend sein. Beispielsweise ist es für eine Antriebssteuerung eine genauere Modellierung des Höhenprofils nötig. Daher sollten weitere Zwischenknoten als signifikante Knoten markiert werden, damit diese bei Anwendung des Douglas-Peucker-Algorithmus bezüglich der Attribute Höhengrad und Längengrad nicht entfernt werden. Die Untersuchung der Zwischenknoten und die etwaige Markierung dieser erfolgt durch den Prozessor 202 in Fig. 2, welcher bspw. eine Änderung der Segmentsteigung untersucht. Dies wird mit Bezug auf Fig. 4b) erläutert.

Hierzu wird zunächst der erste Zwischenknoten beginnend ab dem Startknoten K1 betrachtet. Der ersten Zwischenknoten ist der Zwischenknoten Z1. Die Steigung des Segments zwischen K1 und Z1 wird mit der Steigung des Segments zwischen Z1 und Z2 verglichen. Liegt die Änderung der Steigung unterhalb eines Schwellwertes, so kann Z1 aus der Menge der Zwischenknoten entfernt werden, andernfalls wird Z1 als signifikanter Knoten markiert. Die Segmentsteigung lässt sich über die Höhendifferenz zwischen zwei Knoten bestimmen. Es wird mithin die Differenz der Höhe zwischen Z1 und K1, d.h. der Steigung des Segments zwischen K1 und Z2, mit der Differenz der Höhe zwischen Z2 und Z1, d.h. der Steigung des Segments zwischen Z2 und Z1 verglichen. Die Änderung der Steigerung ist hier unterhalb des Schwellwertes. Deshalb kann Z1 aus der Menge von Zwischenknoten entfernt werden.

Nun wird Z2 untersucht. Dabei wird die Segmentsteigung des Segments zwischen K1 und Z2 und die Segmentsteigung des Segments zwischen Z2 und Z3 betrachtet. Die Änderung dieser Segmentsteigungen ist wieder unterhalb des Schwellwertes. Deshalb kann Z2 aus der Menge von Zwischenknoten entfernt werden.

Nun wird Z3 untersucht. Dabei wird die Segmentsteigung des Segments zwischen K1 und Z3 und die Segmentsteigung des Segments zwischen Z3 und Z4 betrachtet. Die Änderung dieser Segmentsteigungen ist wieder unterhalb des Schwellwertes. Deshalb kann Z3 aus der Menge von Zwischenknoten entfernt werden.

Nun wird Z5 untersucht. Z4 war bereits als signifikanter Knoten markiert. Dabei wird die Segmentsteigung des Segments zwischen Z4 und Z5 und die Segmentsteigung des Segments zwischen Z4 und Z5 betrachtet. Die Änderung dieser Segmentsteigungen ist diesmal oberhalb des Schwellwertes, da das Höhenprofil ein starkes Gefälle aufweist. Deshalb wird Z5 als signifikanter Zwischenknoten markiert und darf bei einer späteren Anwendung des Douglas-Peucker-Algorithmus bezüglich der Attribute Längengrad und Breitengrad nicht entfernt werden.

Nun wird Z6 untersucht. Dabei wird die Segmentsteigung des Segments zwischen Z5 und Z6 und die Segmentsteigung des Segments zwischen Z6 und Z7 betrachtet. Die Änderung dieser Segmentsteigungen ist wieder oberhalb des Schwellwertes, da das Höhenprofil hier einen Übergang von einem starken zu einem schwachen Gefälle aufweist. Deshalb wird Z6 als signifikanter Zwischenknoten markiert und darf bei einer späteren Anwendung des Douglas-Peucker-Algorithmus bezüglich der Attribute Längengrad und Breitengrad nicht entfernt werden.

Nun wird Z7 untersucht. Dabei wird die Segmentsteigung des Segments zwischen Z6 und Z7 und die Segmentsteigung des Segments zwischen Z7 und Z8 betrachtet. Die Änderung dieser Segmentsteigungen ist wieder unterhalb des Schwellwertes. Deshalb kann Z7 aus der Menge von Zwischenknoten entfernt werden.

Nun wird Z8 untersucht. Dabei wird die Segmentsteigung des Segments zwischen Z7 und Z8 und die Segmentsteigung des Segments zwischen Z8 und K2 betrachtet. Die Änderung dieser Segmentsteigungen ist wieder unterhalb des Schwellwertes. Deshalb kann Z8 aus der Menge von Zwischenknoten entfernt werden.

Eine Zusammenfassung des obigen Verfahrens ist in Fig. 4 c) dargestellt.

Das Ergebnis des Verfahrens ist in Fig. 4 d) dargestellt. Es verbleiben die Zwischenknoten Z4, Z5 und Z6, welche das Höhenprofil für einen elektronischen Horizont genau genug modellieren.

Alternativ zu dem oben beschriebenen Verfahren kann auch der Douglas-Peucker-Algorithmus zunächst auf das Höhenprofil angewendet werden, d.h. bezüglich der Attribute Höhe und der Projektion auf den Breitengrad. Zunächst wird auch Z4 als signifikanter Knoten identifiziert, da bei diesem ein Richtungswechsel bezüglich der Höhe bzw. Segmentsteigung vorliegt. Folglich ist die erste Approximation hier nicht ein Segment zwischen K1 und K2, sonder es wird mit der zweiten Approximation begonnen, welche durch ein erstes Segment zwischen K1 und Z4 und ein zweites Segment zwischen Z4 und K2 gegeben ist. Um zu prüfen, ob diese Approximation ausreicht, wird unter den Zwischenknoten Z1, Z2 und Z3 derjenige Zwischenknoten gesucht, welcher den größten Abstand von dem Segment zwischen K1 und Z4 hat. Dies ist Z1. Da der Abstand kleiner als ein Schwellwert ist, so ist die Approximation ausreichend und Z1, Z2, und Z3 können entfernt werden. Um zu prüfen, ob die zweite Approximation ausreicht, wird des Weiteren unter den Zwischenknoten Z5, Z6, Z7 und Z8 derjenige Zwischenknoten gesucht, welcher den größten Abstand vom Segment zwischen Z4 und K2 hat. Dies ist Z6. Da der Abstand größer als der Schwellwert ist, ist die zweite Approximation durch das Segment zwischen Z4 und K2 nicht ausreichend.

Die dritte Approximation ist somit ein Segment zwischen K1 und Z4, ein Segment zwischen Z4 und Z6 und ein Segment zwischen Z6 und K2. Um zu prüfen, ob diese Approximation ausreicht, wird Z5 untersucht, ob dessen Abstand zu dem Segment zwischen Z4 und Z6 einen Schwellwert überschreitet. Da dies hier der Fall ist, ist die Approximation nicht ausreichend. Folglich muss das Segment zwischen Z4 und Z6 weiter verfeinert werden zu zwei Segmenten, einem zwischen Z4 und Z5 und einem zwischen Z5 und Z6. Es ist weiterhin zu überprüfen, ob das Segment zwischen Z6 und K2 weiter verfeinert werden muss. Hierzu wird untersucht, welcher von den Zwischenpunkten Z7 und Z8 den größten Abstand zum Segment zwischen Z5 und K2 hat. Dies ist Z7. Da der Abstand einen Schwellwert nicht überschreitet, können Z7 und Z8 gelöscht werden. Im Ergebnis ergibt sich eine vierte Approximation mit einem Segment zwischen K1 und Z4, einem Segment zwischen Z4 und Z5, einem Segment zwischen Z5 und Z6 und einem Segment zwischen Z6 und K2.

Es verbleiben mithin Z4, Z5 und Z6 als signifikante Zwischenknoten, die bei einer weiteren Anwendung des Douglas-Peucker-Algorithmus hinsichtlich der Attribute Längengrad und Breitengrad nicht entfernt werden dürfen.

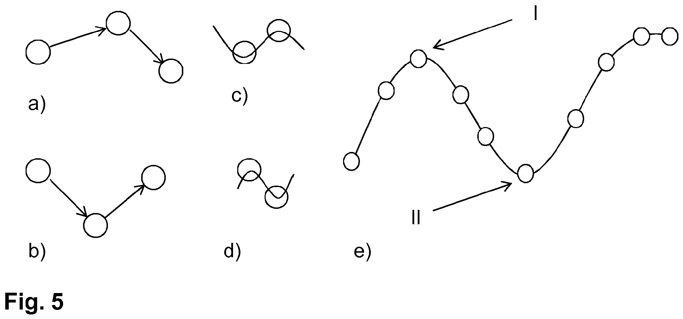

Fig. 5 verdeutlicht noch einmal grafisch die Richtungswechsel bezüglich der Attribute Steigung, Kurvenradius und Höhe.

Fig. 5 a) zeigt einen Richtungswechsel des Attributs Steigung von Steigung aufwärts nach Steigung abwärts. Fig. 5 b) zeigt einen Richtungswechsel bezüglich des Attributs Steigung von Steigung abwärts nach Steigung aufwärts. Fig. 5 c) zeigt einen Richtungswechsel bezüglich des Attributs Kurvenradius von Kurvenradius links nach Kurvenradius rechts. Fig. 5 d) zeigt einen Richtungswechsel bezüglich des Attributs Kurvenradius von Kurvenradius rechts nach Kurvenradius links. Fig. 5 e) zeigt einen Richtungswechsel bezüglich des Attributs Höhe von Höhe steigend nach Höhe fallend und von Höhe fallend nach Höhe steigend.

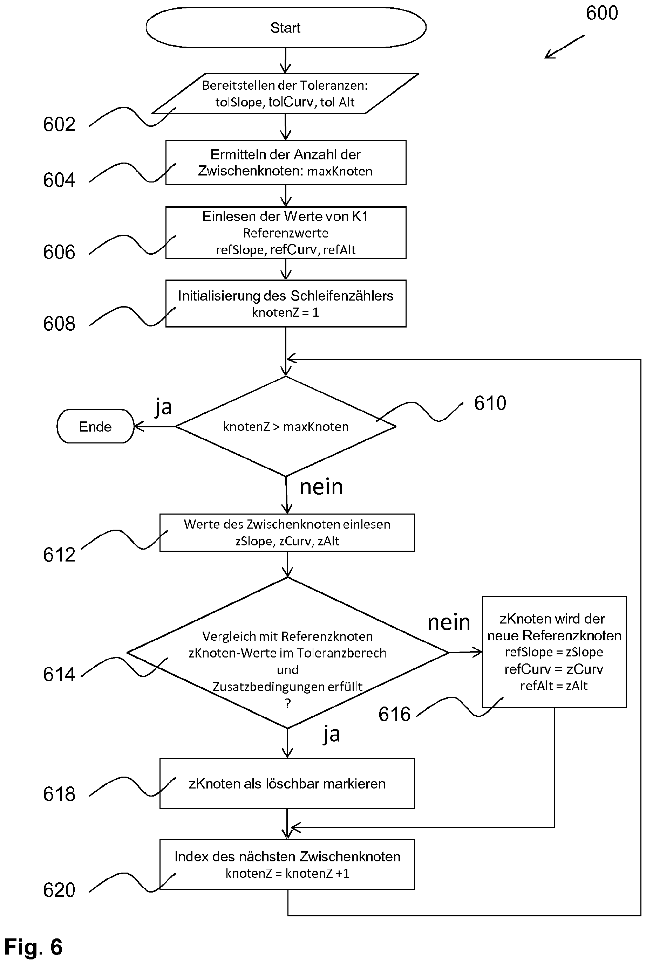

Eine Ausgestaltung des Verfahrens wird im Folgenden anhand des Flussdiagramms in Fig. 6 erläutert.

In Schritt 602 werden die Toleranzen für die Steigung tolSlope, die Krümmung tolCurv und die Höhe tolAlt bereitgestellt. In Schritt 604 wird die Anzahl der Zwischenknoten ermittelt. Diese ist mit maxKnoten bezeichnet. In Schritt 606 werden Referenzwerte für die Steigung refSlope, die Krümmung refCurv und die Höhe refAlt für den Startknoten K1 eingelesen. In Schritt 608 wird ein Schleifenzähler mit dem Wert eins initialisiert, welcher über die Anzahl der Zwischenknoten mit Index knotenZ läuft. In Schritt 610 wird überprüft, ob die maximale Anzahl von Zwischenknoten bereits überschritten wurde. Ist dies der Fall, terminiert das Verfahren. Ist dies nicht der Fall so werden die für die Steigung zSlope, die Krümmung zCurv und die Höhe zAlt für den jeweiligen Zwischenknoten eingelesen. In Schritt 614 werden diese Werte mit den Werten des Referenzknotens verglichen und überprüft, ob eine Abweichung noch im Toleranzbereich liegt.

Hierzu wird überprüft, ob der Absolutbetrag der Differenz des Steigungswertes des Zwischenknotens und des Steigungswertes des Referenzknotens unterhalb der Toleranz für die Steigung liegt: abs(zSlope - refSlope) < toleranceSlope.

Hierzu wird überprüft, ob der Absolutbetrag der Differenz des Krümmungswertes des Zwischenknotens und des Krümmungswertes des Referenzknotens unterhalb der Toleranz für die Krümmung liegt: abs(zCurvature - refCurvature) < toleranceCurvature.

Hierzu wird überprüft, ob der Absolutbetrag der Differenz des Höhenwertes des Zwischenknotens und des Höhenwertes des Referenzknotens unterhalb der Toleranz für die Höhe liegt: abs(zAltitude - refAltitude) < toleranceAltitude.

Darüber hinaus wird in Schritt 614 zusätzlich überprüft folgende Zusatzbedingungen bezüglich eines Richtungswechsels von Steigung, Krümmung und Höhe erfüllt sind:
(((zSlope > 0 und refSlope > 0) oder (zSlope < 0 und refSlope < 0) oder (zSlope = 0 und refSlope = 0)) und
((zCurvature > 0 und refCurvature > 0) oder (zCurvature < 0 und refCurvature < 0) oder (zCurvature = 0 and refCurvature = 0)) und
((zAltitude > 0 und refAltitude > 0) oder (zAltitude < 0 und refAltitude < 0) oder (zAltitude = 0 and refAltitude = 0)))

In obigen Verknüpfungen betreffen "und" und "oder" logisches und sowie logisches oder.

Sind die Zusatzbedingungen erfüllt, liegt kein Richtungswechsel vor.

Liegen die Vergleichswerte für Steigung, Krümmung und Höhe im Toleranzbereich und sind die Zusatzbedingungen erfüllt, so wird in Schritt 618 der betreffende Zwischenknoten als löschbar markiert, d.h. dieser kann aus der Menge von Zwischenknoten entfernt werden. Ist dies nicht der Fall, handelt es sich um einen signifikanten Knoten und dieser wird in Schritt 616 als Referenzknoten für den nächsten Schleifendurchlauf festgelegt.

In Schritt 620 wird der Index des Zwischenknotens um eins erhöht und der Schleifendurchlauf beginnt erneut mit Schritt 610.

Die oben beschriebenen Aspekte und Ausführungsformen des Verfahrens zur Reduktion von Zwischenknoten können sowohl auf einem Prozessor einer in einem Target, bspw. in einem Fahrzeug, verbauten oder befindlichen ADAS-Architektur ausgeführt werden, um eine ADAS- Karte für eine E-Horizont-Applikation zu berechnen, als auch auf einem externen Server, d.h. es wird eine dezidierte ADAS-Karte vorberechnet. Die Vorberechnung der ADAS-Karte auf einem externen Server und anschließende Übertragung an das Target hat den Vorteil, dass auf dem Target Rechenzeit gespart und die Größe der Kartendatenbank auf dem Target reduziert werden kann.

## Patentansprüche

1. Verfahren zur Reduktion von Zwischenknoten in einem Streckenzug mit einem oder mehreren Zwischenknoten einer Menge von Zwischenknoten (Z1, Z2, ..., Z8) zwischen einem Anfangsknoten (K1) und einem Endknoten (K2) wobei dem Anfangsknoten, dem Endknoten und jedem Zwischenknoten der Menge von Zwischenkoten neben den Attributen Längengrad und Breitgrad zumindest ein weiteres Attribut mit einem Attributwert und einer Attributrichtung einer Menge weiterer Attribute zugeordnet ist,
wobei es sich bei dem mindestens einen weiteren Attribut um eine Steigung oder eine Höhe oder einen Kurvenradius handelt, das Verfahren aufweisend:
in einem oder mehreren Prozessoren, für jeden Zwischenknoten, beginnend ab dem Anfangsknoten:
Vergleichen der Attributrichtung des zumindest einen weiteren Attributs eines Zwischenknoten mit der Attributrichtung des zumindest einen weiteren Attributes des unmittelbaren Vorgängerknotens;
Markieren des Zwischenknoten als signifikanten Knoten, wenn sich aus dem Vergleichen ein Richtungswechsel der Attributrichtung ergibt; und Anwenden eines Linienverallgemeinerungsverfahrens bezüglich der Attribute Längengrad und Breitengrad, wobei die als signifikante Knoten markierte Zwischenknoten nicht entfernt werden dürfen.

2. Verfahren nach Anspruch 1, aufweisend:
vor Anwenden des Linienverallgemeinerungsverfahrens, in einem oder mehreren Prozessoren, für jeden Zwischenknoten der Menge von Zwischenknoten, beginnend ab dem Anfangsknoten:
Bestimmen einer Differenz zwischen dem Wert des mindestens einen weiteren Attributes eines Zwischenknotens und dem Wert des mindestens einen weiteren Attributes eines Vorgängerknotens, wobei der Vorgängerknoten einen nächster vorangegangener Anfangsknoten oder ein nächster vorangegangener noch nicht entfernter Zwischenknoten ist; und
Markieren des Zwischenknoten als signifikanten Knoten, wenn die Differenz einen Schwellwert überschreitet, andernfalls Entfernen des Zwischenknoten aus der Menge von Zwischenknoten.

3. Verfahren nach Anspruch 1, ferner aufweisend:
vor Anwenden des Linienverallgemeinerungsverfahrens, in einem oder mehreren Prozessoren, für jeden Zwischenknoten der Menge von Zwischenknoten, beginnend ab dem Anfangsknoten:
Bestimmen einer ersten Differenz zwischen dem Wert des mindestens einen weiteren Attributes eines Zwischenknotens und dem Wert des mindestens einen weiteren Attributes eines Vorgängerknotens, wobei der Vorgängerknoten einen nächster vorangegangener Anfangsknoten oder ein nächster vorangegangener nicht entfernter Zwischenknoten ist;
Bestimmen einer zweiten Differenz zwischen dem Wert des mindestens einen
weiteren Attributes eines unmittelbaren Nachfolgerknotens und dem Wert des mindestens eines weiteren Attributes des Zwischenknoten;
Bestimmen einer Differenz zwischen der ersten Differenz und der zweiten Differenz; und
Markieren des Zwischenknoten als signifikanten Knoten, wenn die Differenz einen Schwellwert überschreitet, andernfalls Entfernen des Zwischenknoten.

4. Verfahren nach Anspruch 1, ferner aufweisend: vor Anwenden des Linienverallgemeinerungsverfahrens, in einem oder mehreren Prozessoren, für jeden Zwischenknoten der Menge von Zwischenknoten, beginnend ab dem Anfangsknoten:
Bestimmen einer ersten Differenz zwischen dem Wert des mindestens einen weiteren Attributes eines Zwischenknotens und dem Wert des mindestens einen weiteren Attributes eines Vorgängerknotens, wobei der Vorgängerknoten einen nächster vorangegangener Anfangsknoten oder ein nächster vorangegangener nicht entfernter Zwischenknoten ist;
Bestimmen einer zweiten Differenz zwischen dem Wert des mindestens einen weiteren Attributes des unmittelbaren Nachfolgerknotens und dem Wert des mindestens eines weiteren Attributes des Vorgängerknoten;
Bestimmen einer Differenz zwischen der ersten Differenz und der zweiten Differenz; und
Markieren des Zwischenknoten als signifikanten Knoten, wenn die dritte Differenz einen Schwellwert überschreitet, andernfalls Entfernen des Zwischenknoten.

5. Verfahren nach einem der Ansprüche 1 bis 4, wobei die Menge der Attribute zwei Attribute umfasst und wobei das Markieren des Zwischenknoten als signifikanten Knoten und das Entfernen des Zwischenknoten bezüglich der zwei Attribute erfolgt.

6. Verfahren nach einem der Ansprüche 1 bis 5, wobei es sich bei dem Linienverallgemeinerungsverfahren um den Douglas-Peucker-Algorithmus handelt.

7. Verfahren nach einem der Ansprüche 1 bis 6, wobei es sich bei dem Streckenzug um ein Segment eines Straßennetzwerks handelt.

8. Vorrichtung aufweisend einen Prozessor eingerichtet zum Ausführen eines Verfahrens nach einem der Ansprüche 1 bis 7.

## Claims

1. Method for reducing intermediate nodes in a polygonal chain with one or more intermediate nodes of a set of intermediate nodes (Z1, Z2, ..., Z8) between a starting node (K1) and an end node (K2), wherein the starting node, the end node and each intermediate node of the set of intermediate nodes, in addition to the attributes longitude and latitude, is assigned at least one further attribute having an attribute value and an attribute direction of a set of further attributes,
wherein the at least one further attribute is a gradient or a height or a curve radius, the method comprising:
in one or more processors, for each intermediate node, beginning from the starting node:
comparing the attribute direction of the at least one further attribute of an intermediate node with the attribute direction of the at least one further attribute of the immediate predecessor node;
marking the intermediate node as a significant node when the comparison reveals a change of direction of the attribute direction; and
applying a line generalization method in relation to the attributes longitude and latitude, wherein the intermediate nodes marked as significant nodes are not allowed to be removed.

2. Method according to Claim 1, comprising:
before applying the line generalization method, in one or more processors, for each intermediate node of the set of intermediate nodes, beginning from the starting node:
determining a difference between the value of the at least one further attribute of an intermediate node and the value of the at least one further attribute of a predecessor node, wherein the predecessor node is a nearest previous starting node or a nearest previous intermediate node that has not yet been removed; and
marking the intermediate node as a significant node when the difference exceeds a threshold value, otherwise removing the intermediate node from the set of intermediate nodes.

3. Method according to Claim 1, furthermore comprising:
before applying the line generalization method, in one or more processors, for each intermediate node of the set of intermediate nodes, beginning from the starting node:
determining a first difference between the value of the at least one further attribute of an intermediate node and the value of the at least one further attribute of a predecessor node, wherein the predecessor node is a nearest previous starting node or a nearest previous intermediate node that has not been removed;
determining a second difference between the value of the at least one further attribute of an immediate follower node and the value of the at least one further attribute of the intermediate node;
determining a difference between the first difference and the second difference; and
marking the intermediate node as a significant node when the difference exceeds a threshold value, otherwise removing the intermediate node.

4. Method according to Claim 1, furthermore comprising:
before applying the line generalization method, in one or more processors, for each intermediate node of the set of intermediate nodes, beginning from the starting node:
determining a first difference between the value of the at least one further attribute of an intermediate node and the value of the at least one further attribute of a predecessor node, wherein the predecessor node is a nearest previous starting node or a nearest previous intermediate node that has not been removed;
determining a second difference between the value of the at least one further attribute of the immediate follower node and the value of the at least one further attribute of the predecessor node;
determining a difference between the first difference and the second difference; and
marking the intermediate node as a significant node when the third difference exceeds a threshold value, otherwise removing the intermediate node.

5. Method according to one of Claims 1 to 4, wherein the set of attributes comprises two attributes and wherein the intermediate node is marked as a significant node and the intermediate node is removed in relation to the two attributes.

6. Method according to one of Claims 1 to 5, wherein the line generalization method is the Douglas-Peucker algorithm.

7. Method according to one of Claims 1 to 6, wherein the polygonal chain is a segment of a road network.

8. Device comprising a processor configured to execute a method according to one of Claims 1 to 7.

## Revendications

1. Procédé de réduction du nombre de noeuds intermédiaires sur une route comprenant un ou plusieurs noeuds intermédiaires d'un ensemble de noeuds intermédiaires (Z1, Z2, ..., Z8) entre un noeud initial (K1) et un noeud final (K2), dans lequel au moins un autre attribut ayant une valeur d'attribut et une direction d'attribut d'un ensemble d'autres attributs est associé au noeud initial, au noeud final et à chaque noeud intermédiaire de l'ensemble de noeuds intermédiaires, en plus des attributs de longitude et de latitude,
dans lequel ledit au moins un autre attribut est une pente ou une hauteur ou un rayon de courbure, le procédé comprenant :
dans un ou plusieurs processeurs, pour chaque noeud intermédiaire, en commençant par le noeud initial :
la comparaison de la direction d'attribut dudit au moins un autre attribut d'un noeud intermédiaire à la direction d'attribut dudit au moins un autre attribut du noeud prédécesseur immédiat ;
le marquage du noeud intermédiaire comme étant un noeud significatif si la comparaison indique un changement de direction de la direction d'attribut ; et
l'application d'un procédé de généralisation de ligne concernant les attributs de longitude et de latitude, dans lequel les noeuds intermédiaires marqués comme étant des noeuds significatifs ne doivent pas être supprimés.

2. Procédé selon la revendication 1, comprenant :
avant d'appliquer le procédé de généralisation de ligne, dans un ou plusieurs processeurs, pour chaque noeud intermédiaire de l'ensemble de noeuds intermédiaires, en commençant par le noeud initial :
la détermination d'une différence entre la valeur dudit au moins un autre attribut d'un noeud intermédiaire et la valeur dudit au moins un autre attribut d'un noeud prédécesseur, dans lequel le noeud prédécesseur est un noeud initial précédent le plus proche ou un noeud intermédiaire précédent le plus proche qui n'a pas encore été supprimé ; et
le marquage du noeud intermédiaire comme étant un noeud significatif si la différence dépasse une valeur de seuil, sinon la suppression du noeud intermédiaire de l'ensemble de noeuds intermédiaires.

3. Procédé selon la revendication 1, comprenant en outre :
avant d'appliquer le procédé de généralisation de ligne, dans un ou plusieurs processeurs, pour chaque noeud intermédiaire de l'ensemble de noeuds intermédiaires, en commençant par le noeud initial :
la détermination d'une première différence entre la valeur dudit au moins un autre attribut d'un noeud intermédiaire et la valeur dudit au moins un autre attribut d'un noeud prédécesseur, dans lequel le noeud prédécesseur est un noeud initial précédent le plus proche ou un noeud intermédiaire précédent le plus proche non supprimé ;
la détermination d'une deuxième différence entre la valeur dudit au moins un autre attribut d'un noeud successeur immédiat et la valeur dudit au moins un autre attribut du noeud intermédiaire ;
la détermination d'une différence entre la première différence et la deuxième différence ; et
le marquage du noeud intermédiaire comme étant un noeud significatif si la différence dépasse une valeur de seuil, sinon la suppression du noeud intermédiaire.

4. Procédé selon la revendication 1, comprenant en outre :
avant d'appliquer le procédé de généralisation de ligne, dans un ou plusieurs processeurs, pour chaque noeud intermédiaire de l'ensemble de noeuds intermédiaires, en commençant par le noeud initial :
la détermination d'une première différence entre la valeur dudit au moins un autre attribut d'un noeud intermédiaire et la valeur dudit au moins un autre attribut d'un noeud prédécesseur, dans lequel le noeud prédécesseur est un noeud initial précédent le plus proche ou un noeud intermédiaire précédent le plus proche non supprimé ;
la détermination d'une deuxième différence entre la valeur dudit au moins un autre attribut du noeud successeur immédiat et la valeur dudit au moins un autre attribut du noeud prédécesseur ;
la détermination d'une différence entre la première différence et la deuxième différence ; et
le marquage du noeud intermédiaire comme étant un noeud significatif si la troisième différence dépasse une valeur de seuil, sinon la suppression du noeud intermédiaire.

5. Procédé selon l'une quelconque des revendications 1 à 4, dans lequel l'ensemble des attributs comprend deux attributs et dans lequel le marquage du noeud intermédiaire comme étant un noeud significatif et la suppression du noeud intermédiaire sont effectués sur les deux attributs.

6. Procédé selon l'une quelconque des revendications 1 à 5, dans lequel le procédé de généralisation de ligne est l'algorithme de Douglas-Peucker.

7. Procédé selon l'une quelconque des revendications 1 à 6, dans lequel la route est un segment de réseau routier.

8. Dispositif comprenant un processeur conçu pour mettre en oeuvre un procédé selon l'une quelconque des revendications 1 à 7.
